# EUROPEAN PATENT APPLICATION

(11) **EP 4 779 838 A1**
(43) Date of publication of application: **22.07.2026**
(21) Application number: 24881180.4
(22) Date of filing: 09.08.2024
(51) Int. Cl.: H02J 7/00, H01R 13/60, H01R 13/40, H01R 13/502

(54) **FOLDING PIN CHARGER**

(30) Priority: 27.10.2023 CN 202322907250 U
(71) Applicant: Anker Innovations Technology Co., Ltd., Changsha, Hunan 410000 (CN)
(72) Inventor: HUANG, Jianjun, Changsha, Hunan 410000 (CN); QIAN, Jing, Changsha, Hunan 410000 (CN)
(74) Representative: Steffens, Adrian
(86) International application number: PCT/CN2024/111121
(87) International publication number: WO 2025/086811

(57) **Abstract**

Disclosed is a charger with foldable pins (120), including: a pair of pins (120); a housing including an opening configured for the pins (120) to extend from; a button (101) disposed on the housing; and a transmission assembly (110) offset inside the housing, an input end of which is connected to the button (101) and an output end of which is connected to the pins (120), and configured to convert a linear motion generated by pressing the button (101) into a rotating motion and output the rotating motion to the pins (120), to allow the pins (120) to rotate relative to the opening to switch between a folded state and an upright state. While meeting safety dimensions, a rotation axis of the pins (120) may be set closer to a top edge of the housing, the charger occupies less space on a panel of the socket, and when multiple chargers perform charging at the same time, interference between the chargers can be avoided.

## Description

### Field

The present disclosure relates to the technical field of chargers, in particular to a charger with foldable pins.

### Background

A common charger with foldable pins can be used by bending the pins up 90° from an edge of a housing body of the charger, and to meet safety requirements, it is necessary to secure a sufficient distance between the edge of the housing body and the pins. When the pins of the common charger are made upright, a base of the pins is basically in the center of the product, which occupies a large space when the charger is plugged into a socket. When multiple chargers are plugged into a wall socket or power strip at the same time, interference is prone to occur between housing bodies of the chargers.

### Summary

Based on this, it is necessary to provide a charger with foldable pins which occupies a small space and is convenient to use after the pins are plugged into jacks, to solve the problem that when multiple chargers with foldable pins perform charging at the same time, interference is prone to occur between the housing bodies.

A charger with foldable pins, including:
a pair of pins;
a housing including an opening configured for the pins to extend from;
a button disposed on the housing; and
a transmission assembly offset inside the housing, an input end of which is connected to the button and an output end of which is connected to the pins, and configured to convert a linear motion generated by pressing the button into a rotating motion and output the rotating motion to the pins, to allow the pins to rotate relative to the opening to switch between a folded state and an upright state.

In an example, the transmission assembly includes a guide sleeve, a central shaft, and a transmission sleeve, the button is connected to the guide sleeve, the guide sleeve includes two transmission feet, the transmission sleeve includes two first transmission inclined surfaces arranged in opposite directions, the two transmission feet abut against the two first transmission inclined surfaces of the transmission sleeve, respectively; a first end of the central shaft is connected to the transmission sleeve and one of the pins, and a second end of the central shaft is connected to the other of the pins.

In an example, the transmission assembly further includes a rotary sleeve disposed between the guide sleeve and the transmission sleeve, the two transmission feet pass through the rotary sleeve and abut against the two first transmission inclined surfaces of the transmission sleeve, respectively, the rotary sleeve is disposed to rotate synchronously with the transmission sleeve and is fixedly connected to the first end of the central shaft, and an outer circumference of the rotary sleeve is connected to one of the pins.

In an example, each of the two transmission feet of the guide sleeve is provided with an abutment surface, and the two abutment surfaces abut against the two first transmission inclined surfaces, respectively, the transmission sleeve further includes two first bumps, and the two first transmission inclined surfaces are provided on the two first bumps, respectively; and/or the rotary sleeve includes at least two second bumps, when there are two second bumps, each of the two second bumps is provided with a second transmission inclined surface, and the second transmission inclined surface and the abutment surface abut against the first transmission inclined surface.

In an example, the rotary sleeve further includes two limiting plates, the two limiting plates are arranged opposite each other and connected to an inner wall of a body of the rotary sleeve, the first end of the central shaft passes between the two limiting plates; a vacancy is provided between two adjacent side walls of the two limiting plates, and the transmission feet of the guide sleeve are provided in the vacancy.

In an example, the first end of the central shaft is fixedly connected to the rotary sleeve by a bolt.

In an example, the second end of the central shaft is provided with at least one first flat portion, and a base of the pin is provided with a rotary portion, and a hole wall of the rotary portion is provided with a second flat portion that abuts against the first flat portion.

In an example, the transmission assembly further includes an elastic member, a circlip, and an outer sleeve, the circlip is sleeved on the second end of the central shaft, the elastic member is sleeved on the central shaft and abuts between the transmission sleeve and the second end of the central shaft; the outer sleeve is provided with a snap-fit hole, and an inner wall of the housing has a protrusion configured to abut against the snap-fit hole, and the outer sleeve is sleeved on the transmission sleeve and the elastic member to rotate synchronously with the transmission sleeve.

In an example, the charger with foldable pins further includes a bracket and a conductive sheet, wherein the bracket is detachably connected to the housing, the conductive sheet is connected to the bracket, a connection between the pins and the rotary sleeve is provided with a contact portion, the contact portion abuts against the conductive sheet, and the transmission assembly is disposed between the bracket and an inner wall of the housing.

In an example, the housing includes a housing body, a cover, and a decorative plate that are connected with each other, with the opening provided on the cover.

In the above charger with foldable pins, the pins and the button are connected through the transmission assembly. When charging is not required, the pins are folded in the housing. When charging is required, the button is pressed, the transmission assembly converts a linear motion generated by the pressing into a rotating motion and outputs the rotating motion to the pins to allow the pins to rotate relative to the housing and extend from an opening on the housing, thus switching between a folded state and an upright state for charging. The transmission assembly is offset inside the housing. While meeting safety dimensions, a rotation axis of the pins may be set closer to a top edge of the housing. After rotating around the transmission assembly, the pins stand near the top edge of the housing. After the pins are plugged into a charging socket, the charger occupies less space on a panel of the socket. Accordingly, when multiple chargers perform charging at the same time, interference between the chargers can be avoided. Compared to chargers with foldable pins in the related art, the charger with foldable pins according to the present disclosure is more convenient to use and can increase the utilization rate of the charging socket panel. Furthermore, when folded, the pins are completely concealed within the housing, without scratching other objects due to exposed outer ends of the pins.

### Brief Description of the Drawings

- FIG. 1: is a diagram of a charger with foldable pins in a folded state according to an example;
- FIG. 2: is a diagram of a charger with foldable pins in an upright state according to an example;
- FIG. 3: is an exploded view of a charger with foldable pins according to an example;
- FIG. 4: is an exploded view of a transmission assembly of a charger with foldable pins according to an example;
- FIG. 5: is a diagram of assembling some structures of a charger with foldable pins according to an example;
- FIG. 6: is another diagram of assembling some structures of a charger with foldable pins according to an example; and
- FIG. 7: is yet another diagram of assembling some other structures of a charger with foldable pins according to an example.

### Description of Reference Numerals

100: housing body; 200: cover; 300: decorative plate;
101: button; 110: transmission assembly; 120: pin; 121: rotary portion; 122: contact portion;
130: bracket; 131: screw; 140: conductive sheet;
111: guide sleeve; 1111: transmission feet; 1112: abutment surface;
112: transmission sleeve; 1121: first bump; 1122: first transmission inclined surface;
113: rotary sleeve; 1131: second bump; 1132: limiting plate; 1133: second transmission inclined surface;
114: central shaft; 1141: bolt; 1142: first flat portion;
115: elastic member; 116: circlip; 117: outer sleeve; and 1171: snap-fit hole.

### Detailed Description

In order to make the above objects, features and advantages of the present disclosure more obvious and easier to understand, specific examples of the present disclosure will be described in detail with reference to the drawings. Numerous specific details are set forth in the following description to thoroughly understand the present disclosure. However, the present disclosure can be implemented in many other ways different from those described herein, similar improvements can be made by those skilled in the art without departing from the spirit of the present disclosure, and thus the present disclosure is not limited by specific examples to be disclosed below.

In description of the disclosure, it should be understood that orientation or position relationships indicated by the terms "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", "radial", "circumferential", and the like are based on the orientation or position relationships shown in the drawings, which are only for the convenience of describing the disclosure and simplifying the description, and do not indicate or imply that the referred device or element must have a specific orientation and be constructed and operated in a specific orientation, and thus cannot be understood as a limit of the disclosure.

In addition, the terms "first", "second" and "third" herein are used for a descriptive purpose only and are not to be construed as indicating or implying the relative importance or implicitly indicating the number of indicated technical features. Thus, features defined with "first" and "second" may explicitly or implicitly include at least one of such features. **In** the description of the present disclosure, "a plurality of" means at least two, such as two and three, unless otherwise explicitly and specifically defined herein.

In the present disclosure, terms such as "mount", "communicate", "connect", and "fix" should be understood broadly unless expressly specified or defined. For example, the terms may refer to fixed connection, detachable connection, or integration; may refer to mechanical connection or electrical connection; may refer to direct connection, indirect connection via an intermediary, or internal communication or interaction relationship between two elements, unless expressly defined. Specific meanings of the above terms in the present disclosure may be understood by those of ordinary skill in the art in light of specific circumstances.

In the present disclosure, unless otherwise explicitly specified and defined, if a first feature is described as "above" or "below" a second feature, it may mean that the first and second features are in direct contact or in indirect contact through an intermediary. Furthermore, the first feature being "above", "upon" and "on" the second feature may be the first feature being directly above or obliquely above the second feature, or simply mean that the first feature is higher than the second feature in the horizontal height. Furthermore, the first feature being "below", "beneath" and "under" the second feature may be the first feature being directly below or obliquely below the second feature, or simply mean that the first feature is lower than the second feature in the horizontal height.

It should be noted that if an element is referred to be "fixed to" or "disposed on" another element, the element may be directly on the other element or a middle element may be present. If an element is considered to be "connected" to another element, the element may be connected to the other element directly or through an intermediate element. If present, the terms "vertical", "horizontal", "upper", "lower", "left", "right" and similar expressions used herein are for the purpose of description only and are not intended to be the only implementation modes.

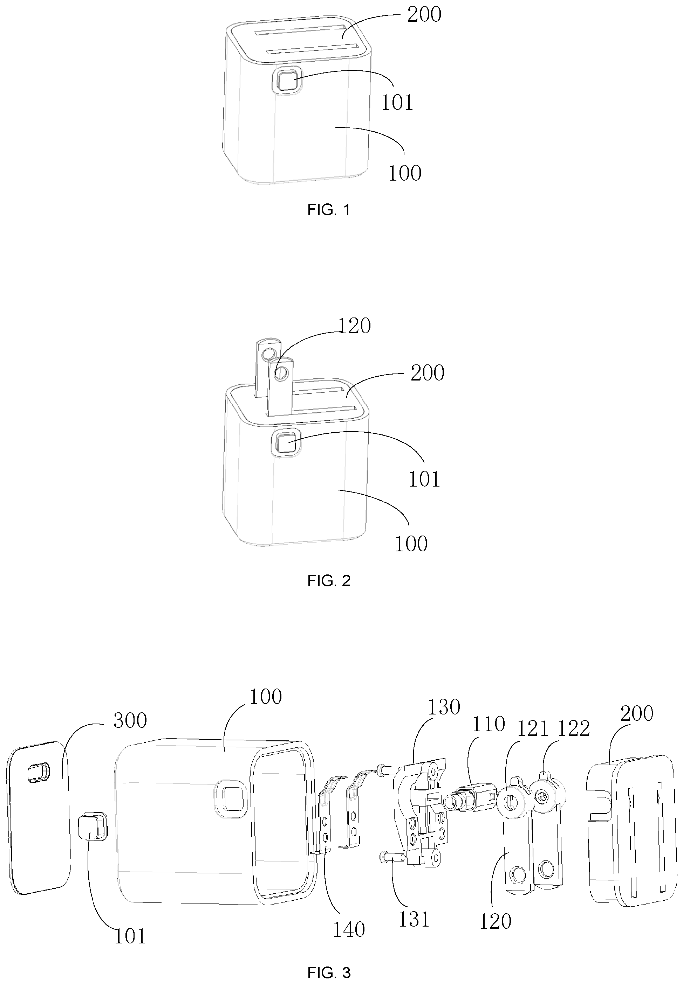

Referring to FIGS. 1 to 5, a charger with foldable pins provided according to an example of the present disclosure includes a pair of pins 120, a housing, a button 101, and a transmission assembly 110. The pins 120 and the button 101 are connected through the transmission assembly 110. When charging is not required, the pins 120 are folded in the housing. When charging is required, the button 101 is pressed, the transmission assembly 110 converts a linear motion generated by the pressing into a rotating motion and outputs the rotating motion to the pins 120 to allow the pins 120 to rotate relative to the housing and extend from an opening on the housing, thus switching between a folded state and an upright state for charging. The transmission assembly 110 is offset inside the housing. While meeting safety dimensions, a rotation axis of the pins may be set closer to a top edge of the housing. After rotating around the transmission assembly 110, the pins 120 stand near the top edge of the housing. After the pins 120 are plugged into a charging socket, the charger occupies less space on a panel of the socket. Accordingly, when multiple chargers perform charging at the same time, interference between the chargers can be avoided. Compared to chargers with foldable pins in the related art, the charger with foldable pins according to the present disclosure is more convenient to use and can increase the utilization rate of the charging socket panel. Furthermore, when folded, the pins 120 are completely concealed within the housing, without scratching other objects due to exposed outer ends of the pins 120.

When the pins are in an upright state, a distance from the pins to the top edge of the housing is equal to or greater than 6 mm, meeting safety dimensions.

To enable the transmission assembly 110 to output rotation to the pins 120, as illustrated in FIGS. 3 to 5, in an example, the transmission assembly 110 includes a guide sleeve 111, a central shaft 114, and a transmission sleeve 112. The button 101 is connected to the guide sleeve 111. The guide sleeve 111 includes two transmission feet 1111, and the transmission sleeve 112 includes two first transmission inclined surfaces 1122 arranged in opposite directions. The two transmission feet 1111 abut against the two first transmission inclined surfaces 1122, respectively. A first end of the central shaft 114 is connected to the transmission sleeve 112 and one of the pins 120, and a second end of the central shaft 114 is connected to the other pin 120. When the button 101 is pressed, the guide sleeve 111 moves toward the transmission sleeve 112. Supported by an elastic abutment force, the guide sleeve 111 and the transmission sleeve 112 perform a linear motion. At the same time, a force of the two transmission feet 1111 of the guide sleeve 111 abutting against the first transmission inclined surfaces 1122 of the transmission sleeve 112 increases, which can generate a rotational torque on the two first transmission inclined surfaces 1122 arranged in opposite directions, causing the transmission sleeve 112 to rotate, and achieving an effect of converting a linear motion generated by the pressing into a rotating motion. When the transmission sleeve 112 rotates, the central shaft 114 rotates synchronously, and the first and second ends of the central shaft 114 may drive the two pins 120 to rotate relative to the housing and then extend from the opening of the housing to achieve the upright state.

Based on the above example, in order to facilitate the connection of the central shaft 114, the transmission sleeve 112, and the pins 120 and make the structure compact, in this example, the transmission assembly 110 further includes a rotary sleeve 113. The rotary sleeve 113 is disposed between the guide sleeve 111 and the transmission sleeve 112. The two transmission feet 1111 pass through the rotary sleeve 113 and abut against the two first transmission inclined surfaces 1122 of the transmission sleeve 112, respectively. The rotary sleeve 113 is disposed to rotate synchronously with the transmission sleeve 112 and is fixedly connected to the first end of the central shaft 114. An outer circumference of the rotary sleeve 113 is connected to one of the pins 120. When the transmission sleeve 112 rotates, the rotary sleeve 113 and the central shaft 114 rotate synchronously. The outer circumference of the rotary sleeve 113 is connected to one of the pins 120, and the second end of the central shaft 114 is connected to the other pin 120. When the rotary sleeve 113 and the central shaft 114 rotate, the two pins 120 are driven to rotate, so that the pins 120 rotate relative to the housing and then extend from the opening of the housing to achieve the upright state.

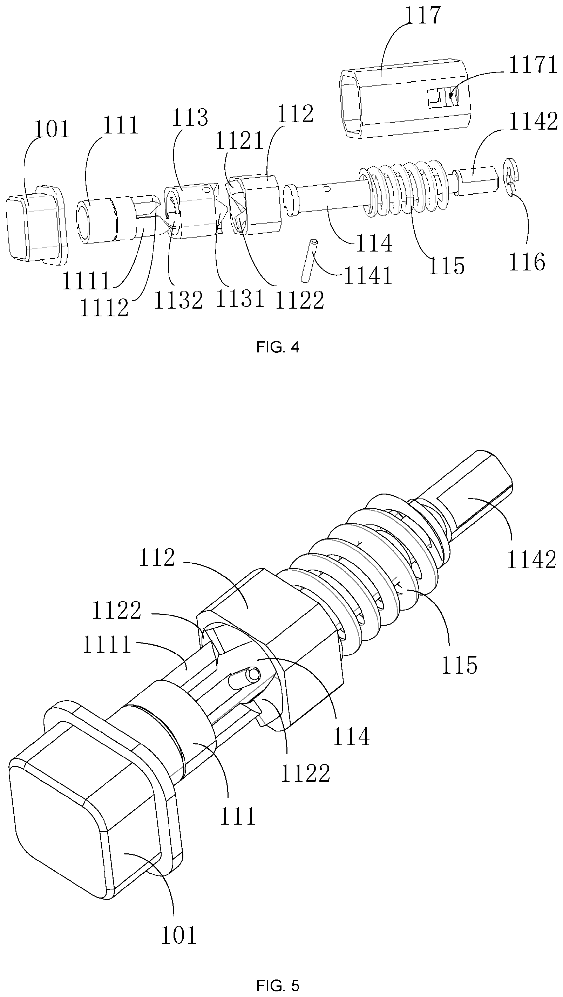

Specifically, as illustrated in FIGS. 4 and 5, in an example, the first end of the central shaft 114 is fixedly connected to the rotary sleeve 113 by a bolt 1141, so that the first end of the central shaft 114 and the rotary sleeve 113 can rotate synchronously. The outer circumference of the rotary sleeve 113 is connected to one of the pins 120 in a tight fit, and the second end of the central shaft 114 is disposed to rotate synchronously with the other pin 120, so that the rotary sleeve 113 and the second end of the central shaft 114 can transmit torques to the two pins 120 respectively, thereby achieving rotation of the two pins 120.

To clarify the structure of the guide sleeve 111 and the transmission sleeve 112, the guide sleeve 111 and transmission sleeve 112 are specifically given below. As illustrated in FIGS. 4 and 5, in an example, each of the two transmission feet 1111 of the guide sleeve 111 is provided with an abutment surface 1112, and the two abutment surfaces 1112 abut against the two first transmission inclined surfaces 1122, respectively. The transmission sleeve 112 also includes two first bumps 1121, and the two first transmission inclined surfaces 1122 are provided on the two first bumps 1121, respectively.

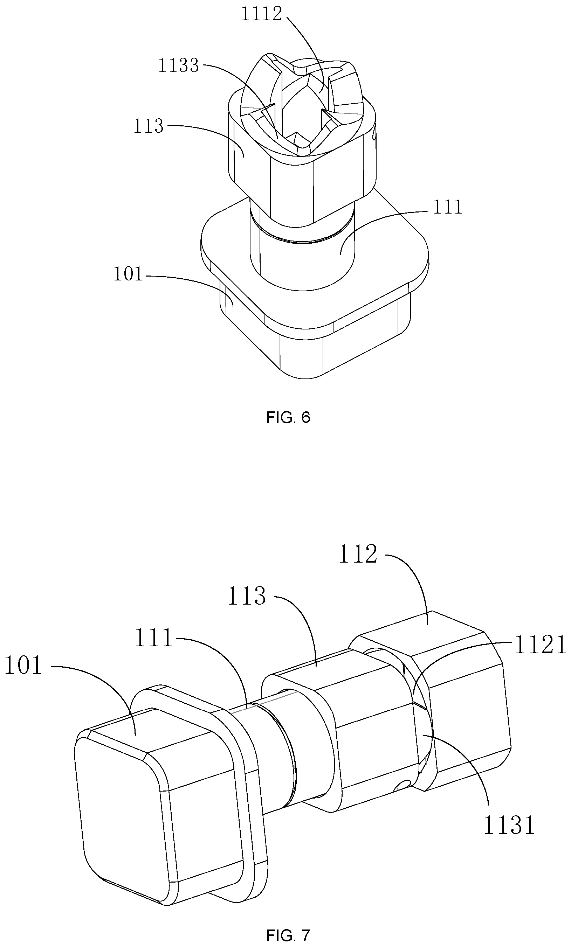

To enable the rotary sleeve 113 to rotate synchronously with the transmission sleeve 112, as illustrated in FIGS. 4 to 7, in an example, the rotary sleeve 113 includes at least two second bumps 1131. When there are two second bumps 1131, each of the two second bumps 1131 is provided with a second transmission inclined surface 1133, and the second transmission inclined surface 1133 abuts against the first transmission inclined surface 1122. When the transmission feet 1111 drive the transmission sleeve 112 to rotate, the first transmission inclined surface 1122 of the transmission sleeve 112 abuts against the second transmission inclined surface 1133 of the rotary sleeve 113 to produce a rotational torque, so that the rotary sleeve 113 and the transmission sleeve 112 rotate synchronously. Widths of the second transmission inclined surface 1133 and the abutment surface 1112 are both smaller than a width of the first transmission inclined surface 1122, so that the first transmission inclined surface 1122 may simultaneously abut against the second transmission inclined surface 1133 and the abutment surface 1112. Accordingly, when the guide sleeve 111 drives the transmission sleeve 112 to rotate, the transmission sleeve 112 may drive the rotary sleeve 113 to rotate synchronously.

Specifically, in the folded state, abutments of the two transmission feet 111 against the two first transmission inclined surfaces 1122 have abutment points. A line connecting the two abutment points is provided at an angle of 45° to a top inner wall of the housing. The travel of the transmission feet on the first transmission inclined surface can make the transmission sleeve rotate 90°, ensuring that the pins can stand upright after rotation.

Alternatively, as illustrated in FIGS. 4 to 7, in an example of the present disclosure, there are four second bumps 1131 and two first bumps 1121. A vacancy is provided between adjacent sides of the two first bumps 1121, every two of the second bumps 1131 are provided in one vacancy, thereby achieving uniform assembly between the four second bumps 1131 and the two first bumps 1121. The first bump 1121 is provided with the second transmission inclined surface 1133 configured to contact the second protrusion, so as to play the same role of transmitting torque.

In order that the transmission feet 1111 of the guide sleeve 111 and the first end of the central shaft 114 both can pass through the rotary sleeve 113, as illustrated in FIGS 4, 5 and 7, in an example, the rotary sleeve 113 further includes two limiting plates 1132. The two limiting plates 1132 are arranged opposite each other and connected to an inner wall of a body of the rotary sleeve 113. The first end of the central shaft 114 passes between the two limiting plates 1132. A vacancy is provided between two adjacent side walls of the two limiting plates 1132. The transmission feet 1111 of the guide sleeve 111 are provided in the vacancy, so that the transmission feet 1111 and the first end of the central shaft 114 are simultaneously connected to the rotary sleeve 113.

To clarify the structure of the central shaft 114, the central shaft 114 is specifically given below. As illustrated in FIG. 4, in an example, the second end of the central shaft 114 is provided with at least one first flat portion 1142, and a base of the pin 120 is provided with a rotary portion 121. A hole wall of the rotary portion 121 is provided with a second flat portion that abuts against the first flat portion 1142. Through the first flat portion 1142 and the second flat portion, a torque is transmitted between the second end of the central shaft 114 and the rotary portion 121 of the pin 120, so that the pin 120 connected to the second end of the central shaft 114 can rotate synchronously with the pin 120 connected to the rotary sleeve 113 to achieve the upright state.

To facilitate folding of the pins 120 and resetting of the transmission assembly 110, as illustrated in FIGS. 3 and 4, in an example, the transmission assembly 110 further includes an elastic member 115, a circlip 116, and an outer sleeve 117. The elastic member 115 is sleeved on the central shaft 114 and abuts between the transmission sleeve 112 and the second end of the central shaft 114. The outer sleeve 117 is provided with a snap-fit hole 1171, and the inner wall of the housing has a protrusion (not illustrated) configured to abut against the snap-fit hole 1171. The circlip 116 is sleeved on the second end of the central shaft 114, and the outer sleeve 117 is sleeved on the transmission sleeve 112 and the elastic member 115 to achieve synchronous rotation with the central shaft 114 and the transmission sleeve 112 through the circlip 116. During charging, after the pins 120 are rotated to the upright state, the protrusion of the housing can enter the snap-fit hole 1171 of the outer sleeve, thereby limiting the outer sleeve 117 and the transmission sleeve 112 and preventing the transmission sleeve 112 from being reversed to fold the pins 120. When the pins 120 are rotated from the upright state to the folded state after the charging is finished, the outer ends of the pins 120 are rotated by applying a force to move the protrusion out of the snap-fit hole 1171. At this time, the elastic member 115 in a compressed state rebounds, which can reset the transmission sleeve 112, the rotary sleeve 113, the central shaft 114 and the guide sleeve 111.

Optionally, the protrusion has an arc-shaped surface to facilitate sliding into or out of the snap-fit hole 1171.

Optionally, as illustrated in FIG. 4, the outer sleeve is provided with a square hole or a near-square hole, and an outer wall of the transmission sleeve is shaped to fit the square hole, so that the outer sleeve and the transmission sleeve can rotate synchronously.

Optionally, the snap-fit hole 1171 may be a rectangular hole, a round hole, or an elliptical hole.

To achieve electric conduction in the charger with foldable pins, as illustrated in FIG. 3, in an example, the charger with foldable pins further includes a bracket 130 and a conductive sheet 140. The bracket 130 is detachably connected to the housing, and the conductive sheet 140 is connected to the bracket 130. A connection between the pins 120 and the rotary sleeve 113 is provided with a contact portion 122. The contact portion 122 abuts against the conductive sheet 140. The transmission assembly 110 is disposed between the bracket 130 and the inner wall of the housing. The transmission assembly 110 and the pins 120 are installed inside the housing via the bracket 130, and the contact portion 122 contacts the conductive sheet 140 to achieve the electric conduction. Optionally, the bracket and the housing are connected by screws.

Furthermore, as illustrated in FIG. 3, the conductive sheet 140 has an arc-shaped structure, which abuts against the contact portion 122. When the pins 120 are rotated to be in the upright state, the contact portion of the pins 120 can remain in contact with the arc-shaped structure to ensure the electric conduction effect.

Optionally, as illustrated in FIGS. 1 to 3, in an example, the housing includes a housing body 100, a cover 200, and a decorative plate 300 that are connected with each other, with the opening provided on the cover 200.

In the above charger with foldable pins, the pins 120 and the button 101 are connected through the transmission assembly 110. When charging is not required, the pins 120 are folded in the housing. When charging is required, the button 101 is pressed, the transmission assembly 110 converts a linear motion generated by the pressing into a rotating motion and outputs the rotating motion to the pins 120 to allow the pins 120 to rotate relative to the housing and extend from an opening on the housing, thus switching between a folded state and an upright state for charging. The transmission assembly 110 is offset inside the housing. While meeting safety dimensions, a rotation axis of the pins may be set closer to a top edge of the housing. After rotating around the transmission assembly 110, the pins 120 stand near the top edge of the housing. After the pins 120 are plugged into a charging socket, the charger occupies less space on a panel of the socket. Accordingly, when multiple chargers perform charging at the same time, interference between the chargers can be avoided. Compared to chargers with foldable pins in the related art, the charger with foldable pins according to the present disclosure is more convenient to use and can increase the utilization rate of the charging socket panel. Furthermore, when folded, the pins 120 are completely concealed within the housing, without scratching other objects due to exposed outer ends of the pins 120.

The technical features of the above-mentioned examples can be combined arbitrarily. For brevity of description, not all possible combinations of the technical features in the above examples are described. However, as long as there is no contradiction between these combinations of the technical features, the combinations should be considered as falling within the scope of the specification.

The examples described above represent only several implementation modes of the present disclosure, which are described in detail but should not be construed as limitations of the scope of the disclosure. It should be noted that several variations and improvements can be made without departing from the spirit of the disclosure for those skilled in the art, all of which fall within the scope of the present disclosure. Accordingly, the scope of the present disclosure should be subject to the appended claims.

## Claims

1. A charger with foldable pins, including:
- a pair of pins;
- a housing including an opening configured for the pins to extend from;
- a button disposed on the housing; and
- a transmission assembly offset inside the housing, an input end of which is connected to the button and an output end of which is connected to the pins, and configured to convert a moving motion generated by pressing the button into a rotating motion and output the rotating motion to the pins, to allow the pins to rotate relative to the opening to switch between a folded state and an upright state.

2. The charger with foldable pins of claim 1, wherein the transmission assembly includes a guide sleeve, a central shaft, and a transmission sleeve, the button is connected to the guide sleeve, the guide sleeve includes two transmission feet, the transmission sleeve includes two first transmission inclined surfaces arranged in opposite directions, the two transmission feet abut against the two first transmission inclined surfaces of the transmission sleeve, respectively; a first end of the central shaft is connected to the transmission sleeve and one of the pins, and a second end of the central shaft is connected to the other of the pins.

3. The charger with foldable pins of claim 2, wherein the transmission assembly further includes a rotary sleeve disposed between the guide sleeve and the transmission sleeve, the two transmission feet pass through the rotary sleeve and abut against the two first transmission inclined surfaces of the transmission sleeve, respectively, the rotary sleeve is disposed to rotate synchronously with the transmission sleeve and is fixedly connected to the first end of the central shaft, and an outer circumference of the rotary sleeve is connected to one of the pins.

4. The charger with foldable pins of claim 2, wherein each of the two transmission feet of the guide sleeve is provided with an abutment surface, and the two abutment surfaces abut against the two first transmission inclined surfaces, respectively, the transmission sleeve further includes two first bumps, and the two first transmission inclined surfaces are provided on the two first bumps, respectively; and/or
- the rotary sleeve includes at least two second bumps, when there are two second bumps, each of the two second bumps is provided with a second transmission inclined surface, and the second transmission inclined surface and the abutment surface abut against the first transmission inclined surface.

5. The charger with foldable pins of claim 2, wherein the rotary sleeve further includes two limiting plates, the two limiting plates are arranged opposite each other and connected to an inner wall of a body of the rotary sleeve, the first end of the central shaft passes between the two limiting plates; a vacancy is provided between two adjacent side walls of the two limiting plates, and the transmission feet of the guide sleeve are provided in the vacancy.

6. The charger with foldable pins of claim 2, wherein the first end of the central shaft is fixedly connected to the rotary sleeve by a bolt.

7. The charger with foldable pins of claim 2, wherein the second end of the central shaft is provided with at least one first flat portion, and a base of the pin is provided with a rotary portion, and a hole wall of the rotary portion is provided with a second flat portion that abuts against the first flat portion.

8. The charger with foldable pins of claim 2, wherein the transmission assembly further includes an elastic member, a circlip, and an outer sleeve, the circlip is sleeved on the second end of the central shaft, the elastic member is sleeved on the central shaft and abuts between the transmission sleeve and the second end of the central shaft; the outer sleeve is provided with a snap-fit hole, and an inner wall of the housing has a protrusion configured to abut against the snap-fit hole, and the outer sleeve is sleeved on the transmission sleeve and the elastic member to rotate synchronously with the transmission sleeve.

9. The charger with foldable pins of any one of claims 1 to 8, further including a bracket and a conductive sheet, wherein the bracket is detachably connected to the housing, the conductive sheet is connected to the bracket, a connection between the pins and the rotary sleeve is provided with a contact portion, the contact portion abuts against the conductive sheet, and the transmission assembly is disposed between the bracket and an inner wall of the housing.

10. The charger with foldable pins of any one of claims 1 to 7, wherein the housing includes a housing body, a cover, and a decorative plate that are connected with each other, with the opening provided on the cover.
